# EUROPEAN PATENT APPLICATION

(11) **EP 1 763 246 A1**
(43) Date of publication of application: **14.03.2007**
(21) Application number: 05461001.9
(22) Date of filing: 08.09.2005
(51) Int. Cl.: H04N 7/24, H04N 5/00

(54) **Method of access to applications transmitted within data streams of different television channels and device giving access to broadcasted applications**

(71) Applicant: Osmosys S.A., 1218 Grand-Saconnex (CH)
(72) Inventor: Mista, Piotr, 61- 388 Poznan (PL)
(74) Representative: Hudy, Ludwik

(57) **Abstract**

A device for scanning television streams and creating a database of applications broadcasted has a signal receiving block (110) capable of receiving applications transmitted within data streams of different television channels. The signal receiving block (110) is linked to the processor (120), which consists of an applications database management block (121), which manages the creation and maintenance of applications database, a block for scanning for applications (122), which scans for applications in selected television channels and an application manager block (123), which manages the applications and user interface, which is a single access point to applications from various channels wherein the block (122) is connected to the block (123) and accepts requests of scanning and it is connected to the block (121) and sends to it information on found applications. The applications database management block (122) is bi-directionally connected to the applications manager block (123), which allows the block applications manager (123) to read and modify the database.

## Description

The invention relates to a method of access to applications transmitted within data streams of different television channels and a device giving access to applications broadcasted in digital television data streams.

Nowadays the interactive television receivers allow for downloading and executing applications, which greatly enhance the features of the receiver. Such applications may for example be Internet browsers, games, e-mail clients, home banking applications or applications presenting additional data during the sport events.

Additionally, during the recent years there have been developed middleware platforms for the digital television receivers, which manage the execution of such applications. One of the commonly known middleware platforms is the Multimedia Home Platform (MHP). MHP has been introduced in order to accelerate and simplify the development and implementation of applications (for example e-mail client) and interactive services (like voting application or software for displaying sports statistics during a live broadcast event) in digital television receivers.

To help accelerate development of software for digital television receivers, the television industry members have created and proposed the digital video broadcasting MHP standard, which is a form of an operating system of a digital television receiver and eases the development and implementation of multimedia rich software in set-top box designs. Such multimedia content also comprises the Electronic Program Guide (EPG) or the channel banner.

The MHP standard, known from the prior art, uses an application programming interface (API) based on the Java programming language. This API defines schemes and interfaces for downloading interactive applications, also called Xlets. The broadcaster sends the Xlets within digital data streams such as MPEG-2 or such Xlets are downloaded to the receiver over Internet connections. In order to store and update the Xlets, most MHP-compliant devices include non-volatile memory, for example Flash memory or a hard drive. Such MHP-compliant device is usually a digital television decoder (also called an Integrated Receiver Decoder (IRD) or a set-top box (STB)).

According to the prior art, applications are broadcasted in a form of modules in the carousel of objects. Applications data and the software code are broadcasted cyclically within the television data stream. Such solution resembles the Teletext system in which separate pages are broadcast in cycles.

The mechanism for transmission of Xlets in digital data streams is called Digital Storage Media Command and Control (DSM-CC) - MPEG-2, defined in ISO/IEC 13818-6 standard. Data are transmitted in the form of carousels using introduced protocol. The 'Data Carousel' is a mechanism for cyclic transmission, as defined by the DSM-CC User-to-Network Download protocol. There is also an 'Object Carousel', which is a mechanism for cyclic transmission of DSM-CC 'User-to-User Objects' over data carousel. Object carousels also convey hierarchical file structures via DSM-CC U-U File and Directory objects.

The Xlets are managed by an Xlets manager, of the operating system, that is responsible for launching the broadcasted applications. The application manager requires several elements to be present in order to launch the Xlet. Among these elements, the application manager needs an application information table (AIT) that is multiplexed with audio and video in the MPEG-2 transport stream. This table contains information describing the Xlet such as the application type, control code, application name, and the initial class to call. Next, the application manager needs the application's Java classes that contain the Java byte codes required by the Java Virtual Machine (JVM). Finally, the application manager needs data objects, such as images, XML files or properties files, for the execution of compiled Java byte code.

The application manager operating in an STB, is responsible for scanning for and finding AITs carried in received transport stream packets. The signaling information contained in AIT is then used for managing an Xlet application.

The AIT placement in the stream packets is defined by the Program Map Table (PMT), which in turn is identified by Program Association Table (PAT) data. The AIT is always associated with a given channel. In a PMT, if the field of stream-type indicates 0x05 (i.e., AIT), the packets under the specified Packet Identifier (PID) will carry the corresponding AIT.

The fact that the AIT is always a part of a given television channel introduces a problem addressed by the present invention. As the interactive television development progresses the number of broadcast applications increases and in the present specifications there exists no single point where the user could receive information on the currently broadcast applications in the whole stream or even television network. Therefore, the present patent application addresses the long felt need to allow the user of the STB to be able to manage, via one graphical user interface all currently broadcasted interactive applications in all available signal sources.

The disadvantage of the present systems lies in that the user in order to access the broadcasted applications of one channel has to tune to that channel and wait until the system determines if any applications are present.

The idea of the invention is that in a method of access to applications transmitted within data streams of different television channels, data streams of television channels are scanned in order to find applications broadcasted on the television channels and that a database of applications broadcasted in all scanned channels is created and stored in a memory, and entries of the database are made available for selection and accessing.

Preferably, the scanning of the data streams is invoked by a user or executed automatically when at least one signal receiving block is idle.

It is favorable that the scanning of the data streams includes scanning of source signals from different signal receiving block types.

It is advantageous that the database of applications comprises information about the application and a channel associated with the application.

The scanning procedure can comprise the steps of tuning to a selected channel, scanning for applications in the selected channel, storing data on available applications in an applications database and repeating steps of the tuning, scanning and storing for all available channels.

Preferably, the entries of the database are available on a user interface screen in a form of a list presenting the applications from different source channels.

Selecting one of the applications can comprise tuning to the service that contains the application, checking whether the selected application is still available and starting the application when it is available.

Preferably, the availability for selection depends on receiver's configuration and the parental rating of the channel or the application.

The idea of the invention is also that in a device for scanning television streams and creating a database of applications broadcasted with a signal receiving block capable to receive applications transmitted within data streams of different television channels. The device also comprises an applications database management block, which manages the creation and maintenance of applications database, a block for scanning for applications, which scans for applications in selected television channels and an application manager block, which gives access to the applications and manages the applications and a user interface, which also gives a single access point to applications from various channels wherein the block is connected to the block and accepts requests of scanning and it is connected to the block and sends to it information on found applications. Further the applications database management block is bi-directionally connected to the applications manager, which allows the block to read and modify the database.

The invention will now be described by way of examples and with reference to the accompanying drawings in which:
Fig. 1 shows a simplified block diagram of a digital television decoder;
Fig. 2 shows an exemplary user interface;
Fig. 3 shows a user-triggered procedure for scanning television streams and creating a database of broadcasted applications;
Fig. 4 shows a flow chart of an algorithm of scanning for application with the use of the JavaTV API.

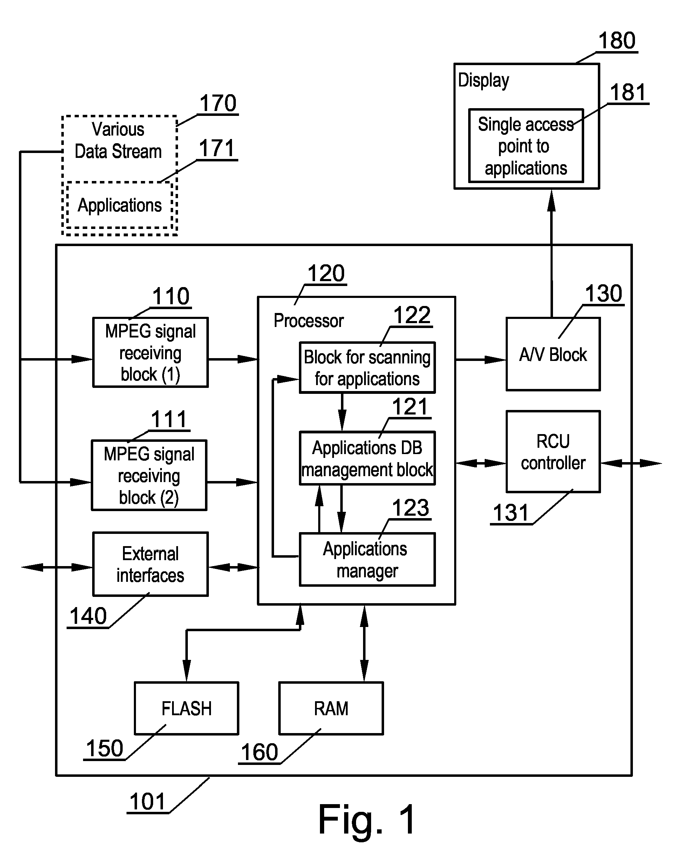

A decoder 101 of digital television, for which the solution according to the present invention is dedicated, is divided into many modules, while its simplified version is shown in Fig. 1.

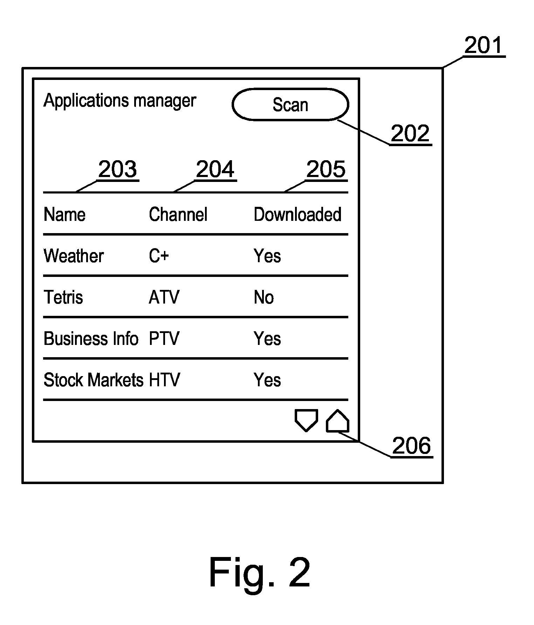

The most important module of the decoder is a processor 120, which comprises a block for scanning for applications 122, which manages scanning for applications present in the received signals. Additionally, according to the invention, the processor 120 includes an internal applications database management block 121, which manages the creation and maintenance of applications database comprising the information on the broadcasted applications. Further, there is a block 123, which manages the applications and gives access to the applications. This block, with the use of the A/V block 130, interacts with the user via the display 180 and a user interface, managed by the applications manager block 123, which creates a single access point to various applications 181 in particular the "Application Manager Menu" shown in Fig. 2.

The block for scanning for applications 122 is linked to the applications manager block 123 and accepts requests of scanning. Moreover it is linked to the applications database management block 121 and sends to it information on found applications. The applications database management block 122 is bi-directionally linked to the applications manager block 123 and allows the applications manager block 123 to read and modify the database, for example to delete an application from the database.

In the decoder 101, an MPEG stream from the MPEG signal reception block 110 is sent to the processor 120. The signals may originate from different sources eg. terrestrial, cable or satellite 170 and comprise applications 171. The MPEG stream is hereby referenced for exemplary purposes only and therefore other audio/video data coding, in that case transmission standards also may be used. Moreover, several signal reception blocks 111 may be used and the applications database management block 121 and the block for scanning for applications 122 can use these additional resources in order to execute scanning for applications in the background when one or more of these front-ends are temporarily idle.

In another embodiment, the blocks 121, 122 and 123 can be separate modules placed outside the processor.

Additionally, the processor has a possibility of bi-directional exchange of data through external interfaces 140. The digital television decoder 101 includes also a few types of memory, which are bi-directionally connected with the processor 120. These are the non-volatile memory 150 (for example, of FLASH type) and operational RAM memory 160. There are programs for controlling the operation of the digital television decoder 101 stored in these memories, including a program, managing the applications list shown in Fig. 2. Favorably the block 121 stores its database in the memory 150.

The block A/V 130 and the remote control unit block 131 allow to transmit the output A/V signal and communicate with external control devices, for example a remote control unit.

The present invention introduces a new approach to the interactive services presentation in digital television receivers. Up to now, interactive, for example MHP, applications were treated as a supplement to traditional video and audio services. The proposed "Applications Manager Menu" option turns that relation back and presents applications, embedded in digital content streams, as the main element of the digital television content, where audio and video have secondary importance. Therefore the user may first determine what applications are broadcasted and then view the corresponding audio/video signal of a given channel.

Fig. 2 presents an embodiment of the user interface for managing applications broadcasted in television data streams. The applications list, defined by the applications database, is available to the user at any time. It lists software from all channels and is created in the decoder 101 by the applications database management block 121. The user interface of the preferred embodiment is displayed on the screen 201. The application manager block 123, giving access to the broadcasted applications and managing the user interface, allows up/down navigation 206 among software from various channels listed by application name 203, the source channel 204 and local availability 205 (i.e the application is stored locally in the receiver's memory and is ready to launch). The source channel 204 can comprise more than one channel name when a given application is broadcasted in more than one channel.

The selection of applications presented by the user interface may be limited. For example to parental rating level and the applications made available for selection may constitute a subset of all broadcasted applications.

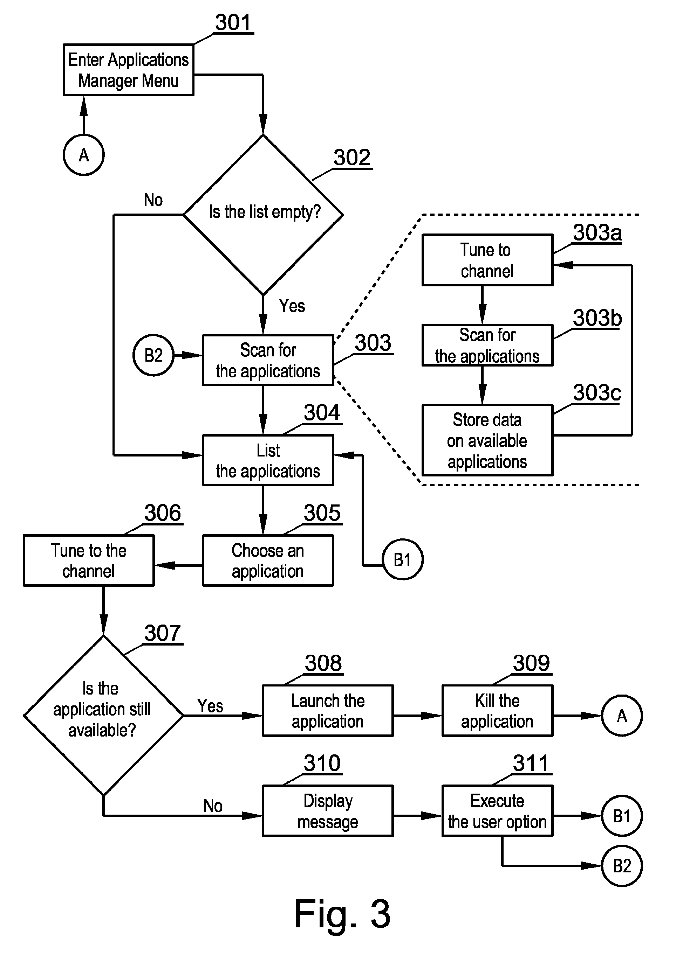

Fig. 3 shows a user-triggered procedure for scanning television streams and creating a database of broadcasted applications. The starting point 301 of the diagram is the place where a user chooses to enter the "Application Manager Menu" option. First the STB main menu is displayed for example by a television set. The next step 302 of the procedure is to check whether the applications database, stored in the receiver, contains any entries. If applications were not scanned earlier, the user is asked if he wants to perform the scanning in step 303. The scanning procedure typically comprises the steps 303a, 303b, 303c, namely: tuning to a channel, scanning for the applications in the channel in order to find applications broadcasted on the channel and storing data on broadcasted applications on the channel in the applications database, which are executed in a loop for all available or for example user favorite channels. When user accepts that proposal the scanning process managed by block for scanning for applications 122 begins.

When the scanning for applications process is completed the list of applications is displayed in step 304 of the procedure. Preferably, the list consists of the information presented in Fig. 2. The user can select in step 305 the application and press 'OK' button of the remote controller in order to launch it. After selection, before the application is started, in step 306 the receiver is tuned to the selected service, which contains the application in order to check in step 307 whether the application is still broadcasted. If the application is broadcasted in more than one service then the first service from the list is chosen as default or the user selects it. If the service is no longer broadcasted or the application is no longer present, appropriate information is displayed in step 310 and the user may choose one of the presented user options in step 311. Such option may, for example, delete the application from the applications database, performing the scanning again or choosing another application. Depending on the case, the procedure returns to the point B1 or B2. If the check in step 307 confirms that the service and application are still present, then the service is selected and the application is started in step 308. When the user finishes using the application in step 309, the receiver will or should remain tuned to the chosen service or return back to the "Application manager menu" to step 301.

In another embodiment in order to keep the most up-to-date database of broadcasted applications, the scanning may be executed during the stand-by state of the receiver or with the use of an unused tuner when the receiver comprises more than one front-ends connected to a given signal source. Moreover the scanning of the streams includes scanning of source signals from different front-end types i.e. terrestrial, cable or satellite.

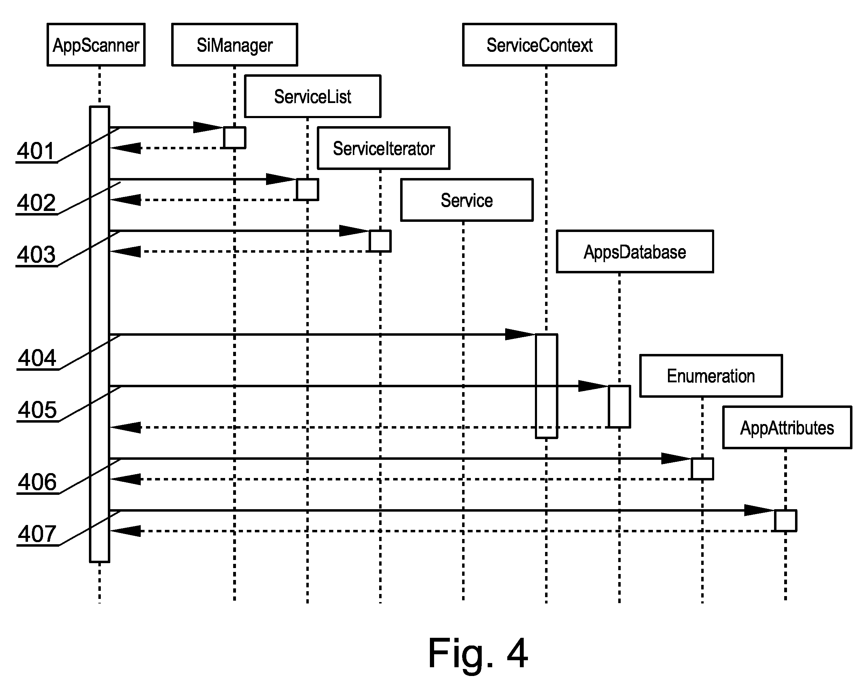

Fig. 4 presents a diagram, which illustrates an exemplary algorithm of application scanning with the usage of JavaTV API available for example in the MHP systems. The AppScanner class is an example of the class, which implements the algorithm and is the main process called in step 303 of the procedure shown in Fig. 3. The following common classes and interfaces are used in case of the MHP system:
- javax.tv.service.SIManager;
- javax.tv.service.navigation.ServiceList;
- javax.tv.service.navigation.Servicelterator;
- javax.tv.service.Service;
- javax.tv.service.selection.ServiceContext;
- org.dvb.application.AppsDatabase;
- org.dvb.application.AppAttributes;
- java.util.Enumeration.

The first step of the algorithm is the creation of the instance of the class javax.tv.service.SIManager. A SIManager represents a managing entity, which has knowledge of all the broadcast resources available to a receiver. Then the method filterServices() of this class is called 401 with the "null" parameter, which means that the list of all broadcasted services has to be created. When the instance of ServiceList object is created then the method createServicelterator() is called on that object 402. This method returns the instance of the Servicelterator class, which can be used to iterate over the list of all broadcasted services. Then the algorithm starts the iteration in a loop. In every iteration of that loop, the method nextService() 403 of the Servicelterator class is called and an instance of the Service class is returned. In order to collect the list of all applications, the presented algorithm tunes into each service using the select() method 404 of the ServiceContext class. The creation of the ServiceContext instance is not illustrated on the diagram. This is done with the ServiceContextFactory class. Application can detect if the service was selected correctly with usage of the ServiceContextListener interface and the ServiceContextEvent class. That was not illustrated on the diagram in order to simplify it. After the service is selected then the AppsDatabase object is created. That object is used to acquire the information about applications broadcasted on currently selected service. The method getAppAttributes() of AppsDatabase object is called 405 with a new instance of the CurrentServiceFilter class as the parameter. That method returns the list of AppAttributes objects, which can be accessed via the Enumeration type with the use of the hasMoreElements() and nextElement() functions 406. Each of those objects represents one application. The methods getName(), getType() and getldentifier() can be used to acquire information about the broadcasted applications 407.

Information about each application can be stored and used to display the list of broadcasted applications. When the user selects the application from the Application manager list and wishes to launch it, then the stored application identifier can be used to create the AppProxy object with the call to getAppProxy() method of AppsDatabase class. The application can be launched and stopped with start() and stop() methods of AppProxyclass.

The present invention deals with applications, which are unlike to the EITs (abbreviation for Event Information Table) that are present in a given transport stream for the actual stream and other streams in case of a television network. There are no AIT tables in a given stream, which would describe applications present in other streams. Therefore in case of EPG there is no need to access each channel of a transport stream or a network of transport streams in order to complete the television schedule data.

The present invention results in simplified access to applications and therefore, is well adapted to carry out the objects and attain the mentioned advantages. Thanks to the present invention the user has almost instantaneous access to applications broadcasted on all channels. The scanning of broadcasted applications on various channels can be executed in the background for the selected group of channels and therefore the user can much quicker access the applications, and the information about the applications is more complete since it covers selection of television channels.

While the present invention has been depicted, described, and is defined by reference to particular preferred embodiments of the invention, such references in the foregoing specification do not imply a limitation on the invention. It will, however, be evident that various modifications and changes may be made thereto without departing from the broader scope of the invention. The presented preferred embodiments of the invention are exemplary only, and are not exhaustive of the scope of the invention. Consequently, the invention is intended to be limited only the spirit and scope of the appended claims.

## Claims

1. A method of access to applications transmitted within data streams of different television channels **characterized in that** at least two data streams of television channels are scanned in order to find applications broadcasted on the television channels and that a database of applications broadcasted in all scanned channels is created and stored in memory, and entries of the database are made available for selection and accessing.

2. The method, according to claim 1, **characterized in that** the scanning of the data streams is invoked by a user or executed automatically when at least one signal receiving block is idle.

3. The method, according to claim 1, **characterized in that** the scanning of the data streams includes scanning of source signals from different signal receiving block types.

4. The method, according to claim 1, **characterized in that** the database of applications comprises information about the application and a channel associated with the application.

5. The method, according to claim 1, **characterized in that** the scanning procedure comprises the following steps:
tuning to a selected channel;
scanning for applications in the selected channel;
storing data on available applications in an applications database; and
repeating the steps of the tuning, the scanning and storing for all available channels or channels selected by the user.

6. The method, according to claim 1, **characterized in that** the entries of the database are available on a user interface screen in a form of a list presenting the applications from different source channels.

7. The method, according to claim 1, **characterized in that** the selecting one of the applications comprises the following steps:
tuning to the service, which contains the application;
checking whether the selected application is still available; and
starting the application when it is still available.

8. The method, according to claim 1, **characterized in that** the availability for selection depends on receiver configuration and the parental rating of the channel or the application.

9. A device giving access to broadcasted applications equipped with a signal receiving block capable to receive applications transmitted within data streams of different television channels **characterized in that** to the signal receiving block is linked an applications database management block (121) managing creation and maintenance of applications database, a block for scanning for applications (122) scanning for applications in selected television channels, an application manager block (123) managing the applications and giving access to the applications and a user interface, which is a single access point to the applications from various channels wherein the block for scanning for applications (122) is connected to the application manager block (123) and accepts requests of scanning and is connected to the applications database management block (121) and sends to the applications database management block (121) information on found applications, and wherein the applications database management block (121) is bi-directionally connected to the application manager block (123), which allows the application manager block (123) to read and modify the database.
